# FASCICULE DE BREVET EUROPEEN

(11) **EP 3 317 164 B1**
(45) Date de publication et mention de la délivrance du brevet: **11.03.2020**
(21) Numéro de dépôt: 16736521.2
(22) Date de dépôt: 10.06.2016
(51) Int. Cl.: B62D 25/16, B62D 25/18, B60K 15/05

(54) **VÉHICULE AUTOMOBILE COMPRENANT UN PARE-BOUE MUNI D'UNE GOUTTIÈRE**
KRAFTFAHRZEUG MIT EINEM KOTFLÜGEL MIT EINER RINNE
MOTOR VEHICLE HAVING A MUD GUARD PROVIDED WITH A GUTTER

(30) Priorité: 03.07.2015 FR 1556292
(43) Date de publication de la demande: 09.05.2018
(73) Titulaire: PSA AUTOMOBILES S.A., 78300 Poissy (FR)
(72) Inventeur: TAVERNIER, Luc, 25470 Trevillers (FR); GUESNEY, Emmanuel, 25700 Valentigney (FR)
(74) Mandataire: Fernandez, Francis Lionel
(86) Numéro de dépôt international: PCT/FR2016/051407
(87) Numéro de publication internationale: WO 2017/006003

(56) Documents cités:
- EP-A2- 2 006 194
- WO-A2-2016/001501
- FR-A1- 2 944 253
- US-A1- 2015 108 792

## Description

L'invention a trait aux pare-boues des véhicules automobiles et plus particulièrement au pare-boue situé sous une trappe de carburant.

La trappe de carburant est la zone du véhicule par laquelle il est possible d'accéder au réservoir afin de le remplir. La trappe comporte au moins un orifice à partir duquel s'étend un tuyau reliant l'orifice au réservoir. La jonction entre le tuyau et la trappe de carburant est en théorie étanche.

Il est possible, néanmoins, que la jonction ne soit pas parfaitement étanche ou qu'une fuite fasse son apparition au fil du temps. Dès lors, le trop-plein de liquide peut s'échapper de la jonction entre la trappe de carburant et le tuyau, et se déverser sur le côté de caisse, ou sur les éléments de suspension du train arrière.

Le document WO2016001501 décrit un pare-boue avec une goulotte longitudinale dirigeant le trop plein de liquide, ayant pu s'évacuer d'un orifice d'un trop-plein d'une trappe à carburant, vers une extrémité longitudinale du pare-boue.

Le document US2015108792 décrit un véhicule avec un pare-boue et une trappe à carburant.

Un objectif de l'invention est d'éviter un tel incident et d'assurer que toute émanation liquide due à une fuite de la trappe de carburant (ou d'urée) ne vienne accidentellement en contact avec des éléments mécanique et/ou électronique.

A cet effet, il est proposé, en premier lieu, un véhicule automobile comprenant :
- une caisse,
- un pare-boue solidaire de la caisse,
- une trappe de carburant,
dans lequel le pare-boue comprend une gouttière ayant un collecteur et un canal, le collecteur étant placé à l'aplomb de la trappe de carburant.

Ainsi, toute émanation liquide due à une fuite de la trappe de carburant, se retrouve piégée dans le collecteur puis guidée grâce au canal vers un lieu choisi.

Selon l'invention, la gouttière s'étend le long du pare-boue depuis une paroi transversale jusqu'à une extrémité du pare-boue, la paroi transversale s'étendant sur une face supérieure du pare-boue selon un axe Y définissant une direction transversale, horizontale et perpendiculaire à une direction générale de déplacement du véhicule automobile.

Diverses caractéristiques supplémentaires peuvent être prévues, seules ou en combinaison :
- l'extrémité comprend une platine sensiblement horizontale s'étendant en saillie par rapport au pare-boue ;
- la platine comprend un trou ;
- une nervure s'étend en saillie depuis la platine selon un axe Z vertical, perpendiculaire à la direction générale de déplacement du véhicule automobile, la nervure entourant au moins partiellement le trou;
- la nervure comprend une première patte et une seconde patte respectivement en contact avec un bord intérieur secondaire et un bord extérieur secondaire du canal, le trou étant ainsi piégé entre la nervure et le canal ;
- le collecteur comprend un fond, un bord intérieur primaire et un bord extérieur primaire faisant saillie du pare-boue selon un axe Z vertical, perpendiculaire à une direction générale de déplacement du véhicule ;
- à partir d'un premier point d'inflexion situé sur le bord extérieur primaire, une hauteur du bord extérieur primaire mesurée à partir du fond jusqu'à un sommet, décroît jusqu'à disparaître, laissant place au bord extérieur secondaire ;
- à partir d'un deuxième point d'inflexion situé sur le bord intérieur primaire, la hauteur de ce dernier décroît lentement puis à partir d'un troisième point d'inflexion, la hauteur du bord intérieur primaire diminue brusquement pour finalement disparaître et laisser place au bord intérieur secondaire ;
- le bord intérieur secondaire et le bord intérieur primaire se chevauchent, le bord intérieur secondaire débutant entre le deuxième point d'inflexion et le troisième point d'inflexion.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile comprenant un pare-boue,
- la figure 2 est une vue en perspective du pare-boue de la figure 1,
- la figure 3 est une autre vue en perspective du pare-boue des figures 1 et 2,
- la figure 4 est une vue en perspective du pare-boue des figures précédentes, monté sur la caisse d'un véhicule automobile,
- la figure 5 est une vue en coupe du pare-boue de la figure 3 selon V-V,
- la figure 6 est une vue en coupe du pare-boue de la figure 3 selon VI-VI,
- la figure 7 est une vue en coupe du pare-boue de la figure 3 selon VII-VII,
- la figure 8 est une vue en deux dimensions de dessus du pare-boue.

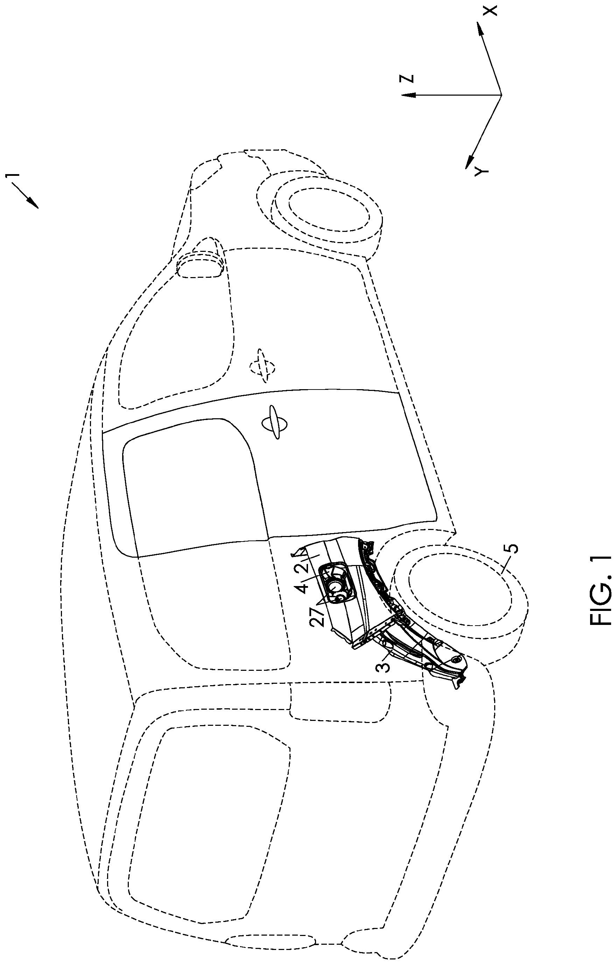

Sur la figure 1 est représenté un véhicule 1 automobile comprenant :
- une caisse 2,
- un pare-boue 3 solidaire de la caisse 2, et
- une trappe 4 de carburant.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

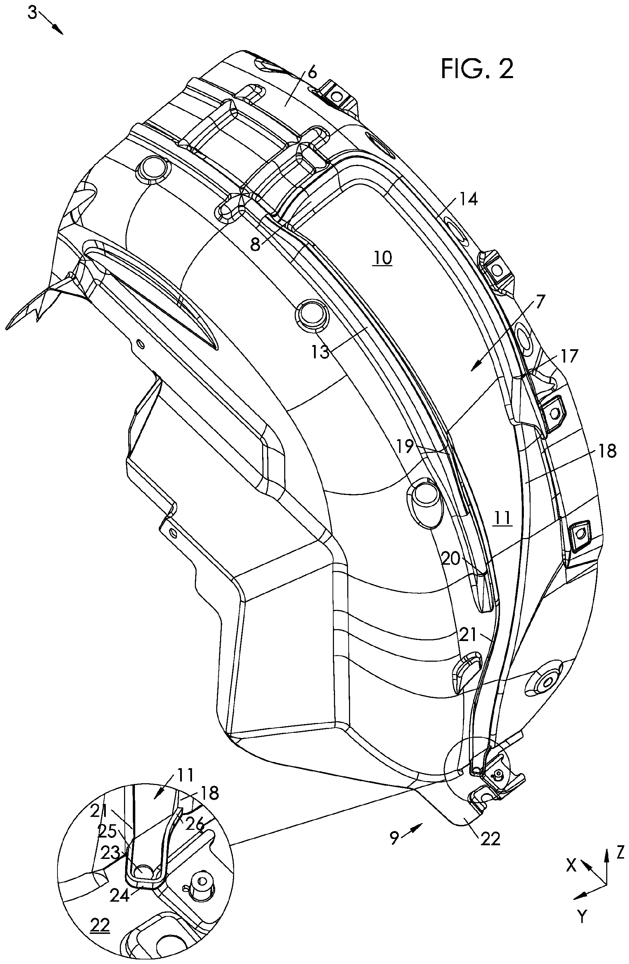

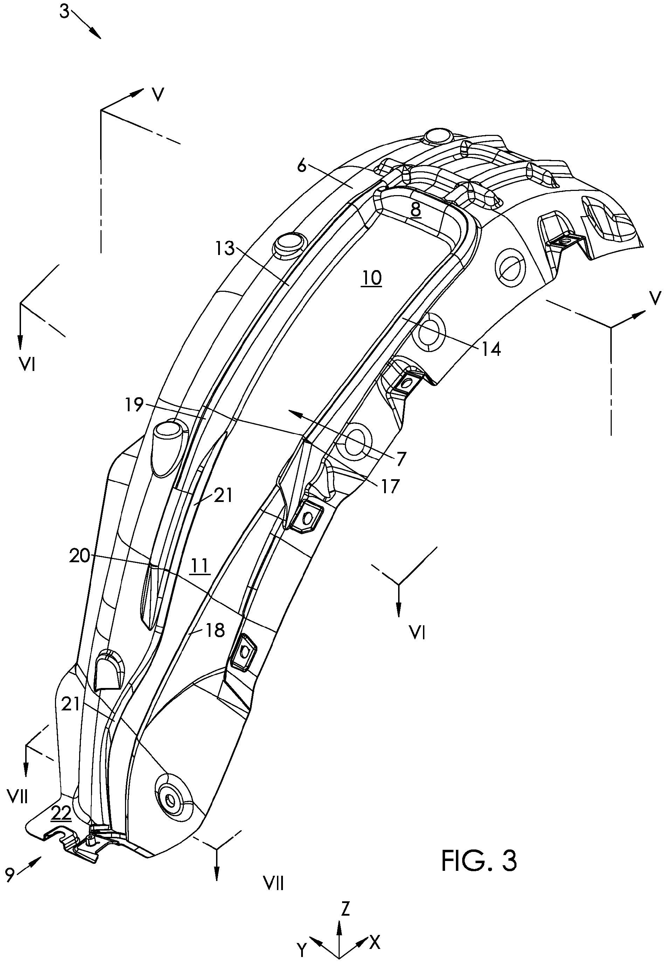

Le pare-boue 3, représenté sur les figure 2 et figure 3, présente une forme générale convexe, dont la convexité est tournée vers l'intérieur de la caisse 2 du véhicule 1 automobile.

Le pare boue est réalisé en matériau métallique, ou en matériau polymère ou bien encore en matériau composite.

Le pare-boue 3 comprend sur une face 6 supérieure positionnée en regard de l'intérieur du véhicule 1, une gouttière 7. La gouttière 7 comprend, en son extrémité supérieure, une paroi 8 transversale, s'étendant sensiblement selon l'axe Y. La gouttière 7 s'étend le long du pare-boue 3 jusqu'à une extrémité 9 inférieure.

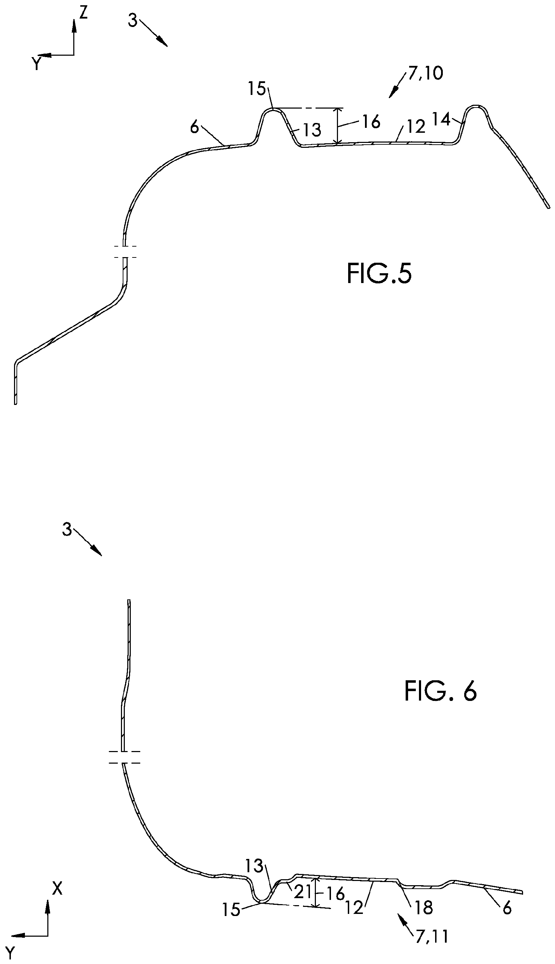

Entre la paroi transversale 8 supérieure et l'extrémité 9 inférieure, la gouttière 7 comprend un collecteur 10 prolongé par un canal 11. En référence à la figure 5, qui est une vue en coupe de la figure 3 selon V-V, le collecteur 10 comprend un fond 12, un bord 13 intérieur primaire et un bord 14 extérieur primaire. Les bords 13, 14 intérieur et extérieur primaires se présentent sous la forme de saillies s'étendant selon l'axe Z et arrondies à un sommet 15.

Le fond 12 présente une forme légèrement convexe, la convexité étant tournée vers l'intérieur du véhicule 1. La convexité du fond 12 permet d'éviter que du liquide ne stagne sur celui-ci.

Les bords 13, 14 intérieur et extérieur primaires bordent la gouttière 7. Une hauteur 16 des bords 13, 14 intérieur et extérieur primaires est mesurée en partant du fond 12 jusqu'à leur sommet 15, comme illustré sur la figure 5. Sur cette même figure, la hauteur 16 du bord 14 extérieur primaire et celle du bord 13 intérieur primaire sont sensiblement identiques. La hauteur 16 du bord 14 extérieur primaire et du bord 13 intérieur primaire est sensiblement constante au fur et à mesure que l'on se déplace dans le sens opposé à l'axe X sur la figure 3.

Toutefois, à partir d'un premier point 17 d'inflexion situé sur le bord 14 extérieur primaire, la hauteur 16 de ce dernier décroît, laissant place à un bord 18 extérieur secondaire. Ce bord 18 extérieur secondaire est visible en coupe sur la figure 6.

A partir d'un deuxième point 19 d'inflexion situé sur le bord 13 intérieur primaire, la hauteur 16 de ce dernier commence à décroitre lentement, comme ceci est visible sur la figure 6 où la hauteur 16 du bord 13 intérieur primaire a diminué en comparaison avec la figure 5.

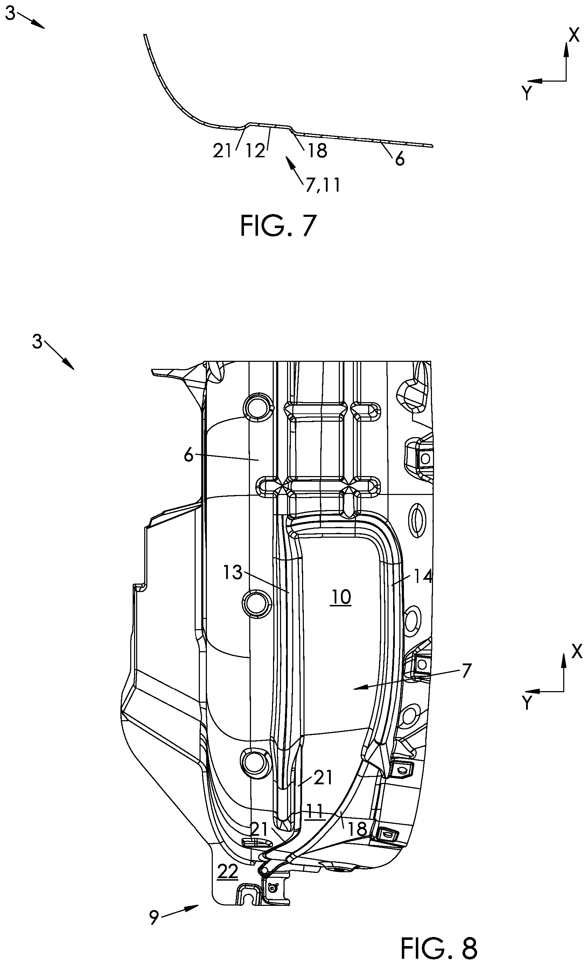

A partir d'un troisième point 20 d'inflexion représenté sur la figure 3, la hauteur 16 du bord 13 intérieur primaire diminue brusquement pour laisser place à un bord 21 intérieur secondaire visible sur la figure 7. Néanmoins, le bord 21 intérieur secondaire, chevauche le bord 13 intérieur primaire. Ainsi, sur une partie du bord 13 intérieur primaire, celui-ci et le bord 21 intérieur secondaire se chevauchent comme illustré sur les figures 3 et 6. Plus précisément, le bord 21 intérieur secondaire débute entre le deuxième point 19 d'inflexion et le troisième point 20 d'inflexion.

Le canal 11 démarre à partir de l'endroit où le bord 14 extérieur primaire s'estompe.

En référence à la figure 2, l'extrémité 9 comprend une platine 22 sensiblement horizontale s'étendant en saillie par rapport au pare-boue 3. La platine 22 comprend un trou 23. Une nervure 24 fait saillie de la platine 22 et s'étend selon l'axe Z. La nervure 24 comprend une première patte 25 en contact avec le bord 21 intérieur secondaire et une seconde patte 26 en contact avec le bord 18 extérieur secondaire. La nervure 24, par ailleurs entoure le trou 23. Le trou 23 est par conséquent piégé entre la nervure 24 et le canal 11.

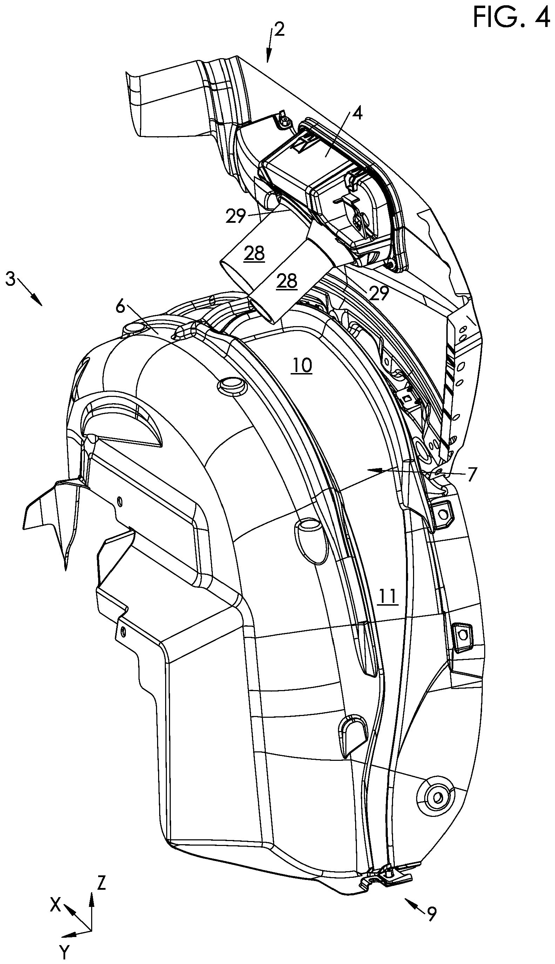

Le bord 13 intérieur primaire présente, sur la figure 8, une forme sensiblement rectiligne. Le bord 14 extérieur primaire est incurvé, et converge vers le bord 13 intérieur primaire. Le bord 18 extérieur secondaire prolonge le bord 14 extérieur primaire. Le bord 18 extérieur secondaire présente une légère forme incurvée convergente vers l'intérieur du véhicule 1 visible sur la figure 4, tandis que le bord 21 intérieur secondaire présente une courbe plus prononcée comparativement.

La forme du canal 11 est en lien avec la position du trou 23 sur la platine 22. Le canal 11 doit, avantageusement, au niveau de la platine 22 au moins, être en regard du trou 23.

Dans le mode de réalisation représenté sur les figures, la trappe 4 de carburant comprend deux orifices 27, chacun étant destiné à recevoir un liquide donné, par exemple gasoil et urée. Toutefois, la trappe 4 de carburant pourrait tout à fait n'en avoir qu'un seul. En se plaçant du côté de l'intérieur de la caisse 2, et en particulier en référence à la figure 4, les orifices 27 sont prolongés par des tuyaux 28 à une jonction 29.

Le collecteur 10 de la gouttière 7 est situé à l'aplomb de la trappe 4 de carburant comme illustré sur la figure 4. Dans l'hypothèse où la jonction 29 n'est pas parfaitement étanche, du liquide s'échappe de la jonction 29 et chute dans le collecteur 10. Le liquide est alors guidé sous l'effet de la gravité le long du collecteur 10 puis du canal 11. Le liquide arrive finalement sur la platine 22 et est évacué par le trou.

La nervure 24 permet d'empêcher le liquide de s'étaler sur la platine 22. Le liquide est ainsi confiné entre le canal 11 et la nervure 24 le temps que celui-ci soit évacué par le trou 23.

Afin que le collecteur 10 puisse pleinement effectuer sa tâche de collecte, il est important que celui-ci s'étende suffisamment selon l'axe X pour que les orifices 27 de la trappe de carburant se trouvent entièrement au dessus du collecteur 10.

Il arrive souvent que les véhicules 1 automobile soient inclinés, notamment en pente ou encore lorsque les roues latérales sont sur un trottoir et les autres sur route. Ceci influence la chute du liquide depuis la jonction 29. En effet, quelle que soit l'inclinaison du véhicule 1, le liquide s'écoule verticalement en chute libre. Il se peut alors que le point d'impact du liquide se trouve en dehors du collecteur 10. Le liquide s'écoulerait alors à l'intérieur de la caisse 2 du véhicule 1 automobile au lieu d'être canalisé vers le trou 23 par la gouttière 7.

Le bord 13 intérieur primaire et le bord 14 extérieur primaire permettent, judicieusement, d'éviter que ceci se produise. La longueur et la hauteur 16 du bord 13 intérieur primaire et du bord 14 extérieur primaire doivent être suffisantes pour empêcher que le liquide ne tombe ailleurs que dans le collecteur 10. Il en va de même pour la largeur (selon l'axe Y) du collecteur 10. Il convient de choisir une largeur suffisante pour minimiser le risque de voir du liquide ne pas tomber dans le collecteur 10 en situation d'inclinaison.

L'avantage que procure un tel pare-boue 3 muni d'une telle gouttière, est qu'il permet d'éviter que toute fuite de liquide depuis la trappe 4 de carburant ne vienne accidentellement en contact avec des éléments mécanique(s) et/ou électronique(s) situés à l'intérieur de la caisse 2 du véhicule 1 automobile.

## Revendications

1. Véhicule (1) automobile comprenant :
- une caisse (2),
- un pare-boue (3) solidaire de la caisse (2),
- une trappe (4) de carburant, ledit pare-boue (3) comprenant une gouttière (7) ayant un collecteur (10) et un canal (11), le collecteur (10) étant placé à l'aplomb de la trappe (4) de carburant, ledit véhicule (1) automobile étant **caractérisé en ce que** la gouttière (7) s'étend le long du pare-boue (3) depuis une paroi (8) transversale jusqu'à une extrémité (9) du pare-boue (3), la paroi (8) transversale s'étendant sur une face (6) supérieure du pare-boue (3) selon un axe Y définissant une direction transversale, horizontale et perpendiculaire à une direction générale de déplacement du véhicule (1) automobile.

2. Véhicule (1) automobile selon la revendication 1, **caractérisé en ce que** l'extrémité (9) comprend une platine (22) sensiblement horizontale s'étendant en saillie par rapport au pare-boue (3).

3. Véhicule (1) automobile selon la revendication 2, **caractérisé en ce que** la platine (22) comprend un trou (23).

4. Véhicule (1) automobile selon la revendication 3, **caractérisé en ce qu'**une nervure (24) s'étend en saillie depuis la platine (22) selon un axe Z vertical, perpendiculaire à la direction générale de déplacement du véhicule (1) automobile, la nervure (24) entourant au moins partiellement le trou (23).

5. Véhicule (1) automobile selon la revendication 4, **caractérisé en ce que** la nervure (24) comprend une première patte (25) et une seconde patte (26) respectivement en contact avec un bord (21) intérieur secondaire et un bord (18) extérieur secondaire du canal (11), le trou (23) étant ainsi piégé entre la nervure (24) et le canal (11).

6. Véhicule (1) automobile selon la revendication 5, **caractérisé en ce que** le collecteur (10) comprend un fond (12), un bord (13) intérieur primaire et un bord (14) extérieur primaire faisant saillie du pare-boue selon un axe Z vertical, perpendiculaire à une direction générale de déplacement du véhicule.

7. Véhicule (1) automobile selon la revendication 6, **caractérisé en ce qu'**à partir d'un premier point (17) d'inflexion situé sur le bord (14) extérieur primaire, une hauteur (16) du bord (14) extérieur primaire mesurée à partir du fond (12) jusqu'à un sommet (15), décroît jusqu'à disparaître, laissant place au bord (18) extérieur secondaire.

8. Véhicule (1) automobile selon la revendication 7, **caractérisé en ce qu'**à partir d'un deuxième point (19) d'inflexion situé sur le bord (13) intérieur primaire, la hauteur (16) de ce dernier décroît lentement puis à partir d'un troisième point (20) d'inflexion, la hauteur (16) du bord (13) intérieur primaire diminue brusquement pour finalement disparaître et laisser place au bord (21) intérieur secondaire.

9. Véhicule (1) automobile selon la revendication 8, **caractérisé en ce que** le bord (21) intérieur secondaire et le bord (13) intérieur primaire se chevauchent, le bord (21) intérieur secondaire débutant entre le deuxième point (19) d'inflexion et le troisième point (20) d'inflexion.

## Patentansprüche

1. Kraftfahrzeug (1), das Folgendes umfasst:
- einen Wagenkasten (2),
- einen Kotflügel (3), der fest mit dem Wagenkasten (2) verbunden ist,
- eine Kraftstofftankklappe (4), wobei der Kotflügel (3) eine Rinne (7) umfasst, die einen Sammler (10) und einen Kanal (11) aufweist, wobei der Sammler (10) in der Senkrechten zu der Kraftstofftankklappe (4) platziert ist, Kraftfahrzeug (1) **dadurch gekennzeichnet, dass** sich die Rinne (7) entlang des Kotflügels (3) von einer Querwand (8) bis zu einem Ende (9) des Kotflügels (3) erstreckt, wobei sich die Querwand (8) auf einer oberen Fläche (6) des Kotflügels (3) entlang einer Achse Y erstreckt, die eine Richtung quer, horizontal und senkrecht zu einer allgemeinen Bewegungsrichtung des Kraftfahrzeugs (1) definiert.

2. Kraftfahrzeug (1) nach Anspruch 1, **dadurch gekennzeichnet, dass** das Ende (9) eine im Wesentlichen horizontale Platte (22) umfasst, die sich in Bezug auf den Kotflügel (3) vorragend erstreckt.

3. Kraftfahrzeug (1) nach Anspruch 2, **dadurch gekennzeichnet, dass** die Platte (22) ein Loch (23) umfasst.

4. Kraftfahrzeug (1) nach Anspruch 3, **dadurch gekennzeichnet, dass** sich eine Rippe (24) von der Platte (22) entlang einer vertikalen Z-Achse, die zu der allgemeinen Bewegungsrichtung des Kraftfahrzeugs (1) senkrecht ist, erstreckt, wobei die Rippe (24) das Loch (23) mindestens teilweise umgibt.

5. Kraftfahrzeug (1) nach Anspruch 4, **dadurch gekennzeichnet, dass** die Rippe (24) eine erste Pratze (25) und eine zweite Pratze (26) jeweils in Kontakt mit einem Sekundärinnenrand (21) und einem Sekundäraußenrand (18) des Kanals (11) umfasst, wobei das Loch (23) daher zwischen der Rippe (24) und dem Kanal (11) gefangen ist.

6. Kraftfahrzeug (1) nach Anspruch 5, **dadurch gekennzeichnet, dass** der Sammler (10) einen Boden (12), einen Primärinnenrand (13) und einen Primäraußenrand (14), die in Bezug auf den Kotflügel entlang einer vertikalen Z-Achse, die zu einer allgemeinen Bewegungsrichtung des Fahrzeugs senkrecht ist, vorragen.

7. Kraftfahrzeug (1) nach Anspruch 6, **dadurch gekennzeichnet, dass** ausgehend von einem ersten Biegungspunkt (17), der auf dem Primäraußenrand (14) liegt, eine Höhe (16) des Primäraußenrands (14), die ausgehend von dem Boden (12) bis zu einem Gipfel (15) gemessen wird, bis zum Verschwinden abnimmt, indem dem Sekundäraußenrand (18) der Platz gelassen wird.

8. Kraftfahrzeug (1) nach Anspruch 7, **dadurch gekennzeichnet, dass** ausgehend von einem zweiten Biegungspunkt (19) auf dem Primärinnenrand (13) die Höhe (16) dieses Letzteren langsam abnimmt, dann, ausgehend von einem dritten Biegungspunkt (20), die Höhe (16) des Primärinnenrands (13) plötzlich abnimmt, um schließlich zu verschwinden und dem Sekundärinnenrand (21) den Platz zu lassen.

9. Kraftfahrzeug (1) nach Anspruch 8, **dadurch gekennzeichnet, dass** der Sekundärinnenrand (21) und der Primärinnenrand (13) einander überlagern, wobei der Sekundärinnenrand (21) zwischen dem zweiten Biegungspunkt (19) und dem dritten Biegungspunkt (20) beginnt.

## Claims

1. A motor vehicle (1) including:
- a body (2),
- a mudguard (3) integral with the body (2),
- a fuel flap (4), said mudguard (3) including a gutter (7) having a collector (10) and a channel (11), the collector (10) being placed plumb with the fuel flap (4), said motor vehicle (1) being **characterized in that** the gutter (7) extends along the mudguard (3) from a transverse wall (8) up to an end (9) of the mudguard (3), the transverse wall (8) extending on an upper face (6) of the mudguard (3) along an axis Y defining a transverse direction, horizontal and perpendicular to a general direction of movement of the motor vehicle (1).

2. The motor vehicle (1) according to Claim 1, **characterized in that** the end (9) includes a substantially horizontal plate (22) extending in a projecting manner with respect to the mudguard (3).

3. The motor vehicle (1) according to Claim 2, **characterized in that** the plate (22) includes a hole (23) .

4. The motor vehicle (1) according to Claim 3, **characterized in that** a rib (24) extends in a projecting manner from the plate (22) along a vertical axis Z, perpendicular to the general direction of movement of the motor vehicle (1), the rib (24) at least partially surrounding the hole (23).

5. The motor vehicle (1) according to Claim 4, **characterized in that** the rib (24) includes a first tab (25) and a second tab (26) respectively in contact with a secondary interior edge (21) and a secondary exterior edge (18) of the channel (11), the hole (23) being thus trapped between the rib (24) and the channel (11).

6. The motor vehicle (1) according to Claim 5, **characterized in that** the collector (10) includes a bottom (12), a primary interior edge (13) and a primary exterior edge (14) projecting from the mudguard along a vertical axis Z, perpendicular to a general direction of movement of the vehicle.

7. The motor vehicle (1) according to Claim 6, **characterized in that** from a first inflection point (17) situated on the primary exterior edge (14), a height (16) of the primary exterior edge (14) measured from the bottom (12) to a top (15) decreases until it disappears, leaving room for the secondary exterior edge (18).

8. The motor vehicle (1) according to Claim 7, **characterized in that** from a second inflection point (19) situated on the primary interior edge (13), the height (16) of the latter decreases slowly from a third inflection point (20), the height (16) of the primary interior edge (13) reduces quickly, to finally disappear and leave room for the secondary interior edge (21).

9. The motor vehicle (1) according to Claim 8, **characterized in that** the secondary interior edge (21) and the primary interior edge (13) overlap, the secondary interior edge (21) starting between the second inflection point (19) and the third inflection point (20) .
